# EUROPEAN PATENT APPLICATION

(11) **EP 0 595 498 A1**
(43) Date of publication of application: **04.05.1994**
(21) Application number: 93308079.8
(22) Date of filing: 11.10.1993
(51) Int. Cl.: B65D 45/32, B65D 43/06

(54) **Storage container**

(30) Priority: 24.10.1992 GB 9222372
(71) Applicant: DYNOPLAST LIMITED, Ashington, Northumberland NE63 0YB (GB)
(72) Inventor: McMath, Graham, Tynemouth, Tyne & Wear NE30 3TH (GB)
(74) Representative: Virr, Dennis Austin

(57) **Abstract**

A lidded container for storing and transporting bulk materials, which is suitable as a re-usable "tamper-proof" container, has a projecting peripheral rib (22) on its outer face, an incomplete peripheral flange (16) on the lid (15) which overlies the peripheral rib when the container is closed, and means (18, 19, 21) for drawing together the ends of the flange.

## Description

The present invention is a storage container which is suitable for use for storing and transporting bulk materials, for example liquids and dry powders.

In the storage and transportation of many products, it is desirable or essential to ensure that the containers used for those purposes are opened only by authorised persons and preferably that evidence of unauthorised opening be apparent. For example, with valuable or dangerous products, it is important that the removal of any product from the container should be readily detected. In the case of food products, unauthorised opening of a container may give rise to contamination or deterioration of the product concerned.

In order to provide evidence of such unauthorised opening, so-called "tamper-proof" containers have been developed. Containers of that type may still be readily opened, but this usually entails breaking a seal of some sort, with the result that it immediately becomes apparent that the container has been opened. Once such a seal has been broken, it may still be possible to use the container again, for example the lid may still be usable, but the destruction of the seal usually means that the container is rendered unsuitable for further tamper-proof use.

Thus presently-available tamper-proof containers may be usable only once for such security purposes. Clearly that is an undesirable limitation on their use and may well make them uneconomical. It is therefore an object of the present invention to provide a storage container which may be secured in a manner which gives evidence of unauthorised opening and which can be used repeatedly in that manner.

The storage container according to the present invention comprises an open-topped body and a lid adapted to be fitted over the opening to close the container, a rib projecting outwardly from the radially outer face of the body within the region of the periphery of the opening and extending around at least a proportion of that periphery, a peripheral flange upon the lid which, in the closed position of the container, overlies the rib on the container body, said peripheral flange extending around a major proportion, but not the whole, of the periphery of the lid, and means for applying to opposed ends of the peripheral flange a force tending to draw said ends towards each other. By applying the latter force by means of a destructible seal, a user is able to tighten the peripheral flange over the projecting rib and thereby secure the lid in place until the seal is subsequently broken. However the lid may be secured in place again for subsequent tamper-proofing of the container by means of a fresh seal.

The container according to the invention may be of any desired shape in plan view. In a preferred form, however, it is generally circular or rectangular, including square. In particular, the container body may take the form of a generally cylindrical, parallel-sided drum or of a round bin, which may, if desired, taper somewhat towards its base. The rib on the radially outer face of the container body may be complete, that is it may extend continuously around the whole periphery of the opening, or may extend around only a proportion, preferably at least a major proportion, of that periphery.

The lid of the container has an incomplete flange which extends around a major proportion of the periphery of the lid and lies over the rib when the lid is in place. Because the flange is incomplete in a direction parallel to the lid periphery, it can be distorted inwardly towards the container body and thereby bend over the rib to retain the lid in place. The distortion is achieved by applying a "pulling" force to the ends of the peripheral flange. In order to assist the application of that force, at least one and preferably both of the ends of the flange preferably extend towards each other in the form of a tongue or tongues lying parallel to the periphery of the lid. The tongues are preferably apertured adjacent their free ends to enable a destructible seal, for example a plastics or metal tie, to be passed through the apertures in order to draw the tongues towards each other.

The distorting of the peripheral flange to secure the lid in place may be made easier and/or more effective if the thickness of the flange is reduced within the region where it overlies the rib on the container body. That is, the flange may be so shaped in cross-section that it is thinner along a line parallel to its long edge. It is further preferred that the flange be stepped or of increased thickness along a line further from its edge, so that it may engage a bead or similar feature running along the edge of the container opening, to retain the lid in position on the container body after the security seal has been broken and for general non-tamper-proof use.

As a further optional feature of the container according to the invention, a handle may be fitted to, or preferably is moulded into, one side of the lid, to make it easier to remove the lid when required without having to apply any force to the distortable peripheral flange.

The invention will now be further described, by way of example only, with reference to the accompanying drawings, which illustrate one preferred embodiment of the storage container according to the present invention and wherein:-
Fig. 1 is a perspective view of the container;
Fig. 2 is a sectional view, to a somewhat larger scale, of a detail of the container, showing the lid in its position of use but without the lid being secured against unauthorised removal; and
Fig. 3 is a corresponding sectional view showing the lid secured against removal.

The illustrated container is a squat, generally cylindrical storage bin 10, which is reinforced by an annular shoulder 11 and has a pair of lifting handles 12 (of which only one is visible) and a pivoted carrying handle 13. The nature of the material currently contained in the bin is displayed on a panel 14.

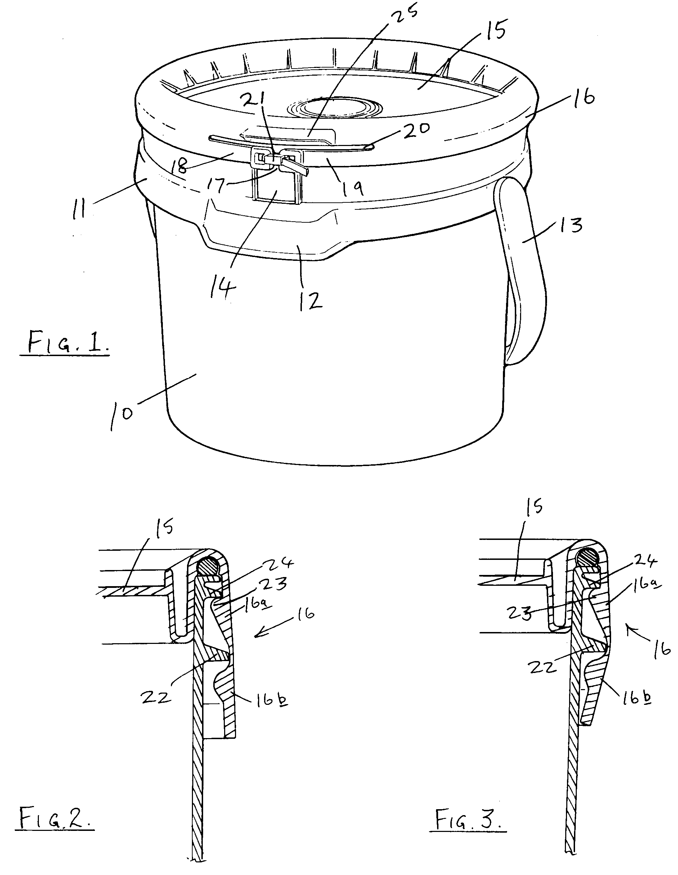

A lid 15 for the bin 10 has a downwardly-extending flange 16 along its periphery. The flange 16 extends from the lid in two stages, identified herein as an upper flange section 16a and a lower flange section 16b. The upper flange section 16a extends along the full periphery of the lid but the lower section 16b is interrupted at 17 (Fig. 1) and the flange ends 18, 19, which face each other across the gap 17, are formed as two apertured tongues, spaced from the upper flange section at this point by an elongated slot 20.

When the container is to be sealed against tampering, a seal 21 in the form of a plastics strap and buckle is passed through the apertures in the tongues 18, 19 and drawn tight. This tightening pulls the tongues towards each other and distorts the flange section 16b by bending it inwardly over an annular rib 22 which encircles the upper end of the bin 10. A thinning of the flange in the zone between the two flange sections assists this bending.

When the container is eventually to be opened again, the seal 21 is cut or broken and the flange section 16b can now return from its distorted state as shown in Fig. 3 to its relaxed state as shown in Fig. 2. The lid is still held in position, but removably so, by a shoulder 23 on the inner face of the flange engaging a further annular rib 24 at the upper edge of the bin. The lid may be removed by the application of an upward pull upon a handle 25, provided for that purpose on the lid.

The container may readily be resealed repeatedly against tampering by applying fresh sealing bands 21 across the tongues 18, 19.

## Claims

1. A storage container comprising an open-topped body (10) and a lid (15) adapted to be fitted over the opening to close the container, characterised in that it further comprises a rib (22) projecting outwardly from the radially outer face of the body within the region of the periphery of the opening and extending around at least a proportion of that periphery, a peripheral flange (16) upon the lid (15) which, in the closed position of the container, overlies the rib (22) on the container body (10), said peripheral flange extending around a major proportion, but not the whole, of the periphery of the lid, and means (18, 19, 21) for applying to opposed ends of the flange a force tending to draw said ends towards each other.

2. A storage container according to Claim 1, characterised in that said body (10) is generally circular or rectangular in plan view.

3. A storage container according to either of the preceding claims, characterised in that said rib (22) extends continuously around the whole periphery of said opening.

4. A storage container according to any of the preceding claims, characterised in that at least one of the ends of said peripheral flange (16) extends in the form of a tongue (18, 19) lying parallel to the periphery of the lid (15).

5. A storage container according to Claim 4, characterised in that both ends of said peripheral flange extend in the form of tongues (18, 19) and said tongues are apertured adjacent their free ends.

6. A storage container according to any of the preceding claims, characterised in that said means for applying said force to opposed ends of the flange comprises a destructible seal (21).

7. A storage container according to Claim 6, characterised in that said destructible seal (21) is a plastics or metal tie.

8. A storage container according to any of the preceding claims, characterised in that the flange (16) is of reduced thickness along a line parallel to its long edge.

9. A storage container according to any of the preceding claims, characterised in that the flange (16) is stepped or of increased thickness (23) along a line parallel to its long edge.

10. A storage container according to Claim 9, characterised by a bead or the like (24) adjacent to the edge of the opening of said body.
